# EUROPÄISCHE PATENTSCHRIFT

(11) **EP 0 724 678 B1**
(45) Veröffentlichungstag und Bekanntmachung des Hinweises auf die Patenterteilung: **30.07.1997**
(21) Anmeldenummer: 94930144.4
(22) Anmeldetag: 13.10.1994
(51) Int. Cl.: E04B 1/41, B23K 11/00

(54) **VERBUNDELEMENT**
LINKING ELEMENT
ELEMENT DE LIAISON

(30) Priorität: 15.10.1993 DE 4335166
(43) Veröffentlichungstag der Anmeldung: 07.08.1996
(73) Patentinhaber: Deha Ankersysteme GmbH & Co. KG, D-64521 Gross-Gerau (DE)
(72) Erfinder: Koch, Eberhard, 69231 Malschenberg (DE); Mächtle, Daniel, 70806 Kornwestheim (DE)
(74) Vertreter: Lewandowsky, Klaus
(86) Internationale Anmeldenummer: DE9401224
(87) Internationale Veröffentlichungsnummer: WO9510672

(56) Entgegenhaltungen:
- EP-A- 0 220 524
- DE-A- 3 531 998
- DE-U- 8 705 644

## Beschreibung

Die Erfindung betrifft ein Verbundelement zum Befestigen von Metallkörpern an bzw. in Betonbauteilen, das einen an bzw. in dem Betonbauteil verankerbaren Kopf und einen mit dem Metallkörper verschweißbaren Fuß aufweist.

Es ist bekannt, Metallkörper, wie Ankerplatten, Ankerschienen oder dergl. mit angeschweißten Bolzenankern zu versehen, um sie an oder in einer Betonplatte zu befestigen. Die bekannten Bolzenanker bestehen aus einem I-förmigen Profilabschnitt aus Stahl oder aus einen Stab mit an seinem einen Ende angeformten scheibenförmigen Fuß und einem an seinem anderen Ende angeformten Ankerkopf bzw. einer aufschraubbaren Ankermutter.

Der Fuß des Bolzenankers ist entweder mit einer um seinen Außenrand gelegten Schweißnaht oder unter Anwendung des Punktschweißverfahrens mit dem Metallkörper, beispielsweise einer im Querschnitt C-förmigen Ankerschiene, die zu Führungszwecken oder zur Aufnahme von Transporthaken dient, verschweißt.

Sowohl bei dem Anlegen einer Schweißnaht um den Außenrand des Fußes als auch bei der Punktschweißung werden nur ungenügende innige Verbindungen zwischen dem Fuß des Bolzenankers und dem Metallkörper erreicht. Im ersten Fall wird nur eine ringförmige Verbindung geschaffen und im zweiten Fall ist die Verschweißung infolge der großen Auflagefläche des Fußes und der geringen Dicke des Metallkörpers nicht homogen über die gesamte Fläche des Fußes gewährleistet.

Das bedeutet, daß die Verbindung zwischen dem Bolzenanker und dem Metallkörper, beispielsweise einer Ankerschiene, mangelhaft und die erforderlichen Haltefestigkeiten nicht erreicht werden. Dies kann im Baubetrieb zu nicht zuverlässig gehaltenen oder befestigten Betonplatten und damit zu Unfällen und Zerstörungen des Baukörpers führen.

Aus der deutschen Offenlegungsschrift DE-A-35 31 998 ist eine im Querschnitt C-förmige Ankerschiene bekannt, auf deren Rücken ein Befestigungsbolzen in geeigneter Weise befestigt ist.

Der Erfingung liegt die Aufgabe zugrunde, einen Bolzenanker so zu gestalten, daß eine zuverlässige Verbindung zwischen ihm und einem Metallkörper, beispielsweise einer Ankerschiene, mit hoher Festigkeit gewährleistet ist.

Dies wird erfindungsgemäß dadurch erreicht, daß die dem Metallkörper zugekehrte Fläche des Fußes des Verbundelements mehrere über die Fläche verteilte und dieselbe übertragene Erhöhungen aufweist.

Auf diese Weise werden beim Punktschweißvorgang eine Vielzahl von Stellen mit hohem elektrischen Übergangswiderstand zwischen dem Fuß des Bolzenankers und dem Metallkörper und damit eine Vielzahl von Schweißstellen erzeugt, die eine innige Verbindung zwischen dem Bolzenanker und dem Metallkörper über die gesamte Fläche des Fußes bewirken. Dies führt zum einen zu einer Verbindung mit hohen Festigkeitswerten und verhindert zum anderen eine Deformierung des Metallkörpers. Funktionsstörungen beim Führen von im Metallkörper bewegten Bauteilen werden auf diese Weise vermieden. Eine C-förmige Ankerschiene könnte beispielsweise nach dem Schweißvorgang so verzogen bzw. an den Schweißstellen in der lichten Weite so beeinträchtigt sein, daß die einwandfreie Führung eines Transporthakens in der Ankerschiene behindert ist.

Im einzelnen kann die Erfindung so getroffen sein, daß das Verbundelement aus einem Bolzenanker mit tellerförmig ausgebildetem Fuß besteht, auf dessen dem Metallkörper zugekehrter Fläche mehrere Noppen ausgebildet sind.

Auch kann der Bolzenanker aus einem I-förmigen Profilabschnitt bestehen, auf dessen dem Metallkörper zugekehrter Fläche mehrere wulst- bzw. zahnförmige Erhebungen bzw. Noppen ausgebildet sind.

Eine weitere vorteilhafte Ausführungsform besteht darin, daß das Verbundelement eine Ankermutter aufweist, in die ein als Gewindebolzen ausgebildeter Bolzenanker einschraubbar ist und auf deren dem Metallkörper zugekehrter Fläche wulst- bzw. zahn- bzw. noppenförmige Erhebungen ausgebildet sind.

Denkbar ist auch eine Ausbildung der Erhöhungen in Form von einem oder mehreren kronenförmigen Stegen, deren dem Metallkörper zugekehrte Oberfläche wellen- bzw. zahnförmig ausgebildet ist.

Die weiteren Merkmale und Vorteile werden Anhand von in der Zeichnung dargestellten Ausführungsbeispielen der Erfindung sowie den weiteren Unteransprüchen beschrieben. Die Zeichnung zeigt in der
- Fig. 1: das erfindungsgemäße Verbundelement mit einer Ankerschiene zur Befestigung einer Deckenplatte an Ortbeton im Schnitt,
- Fig. 2: das erfindungsgemäße Verbundelement mit einer Ankerplatte zur Befestigung einer Deckenplatte an einer weiteren Deckplatte im Schnitt,
- Fig. 3: das Verbundelement gemäß Fig.1 mit einer Ankerschiene verschweißt in schaubildlicher Darstellung,
- Fig. 4: das Verbundelement gemäß Fig.1 in Detaildarstellung in einer Seitenansicht,
- Fig. 5: das Verbundelement gemäß Fig.1 in einer Ansicht in Pfeilrichtung A in Fig.4,
- Fig. 6: ein weiteres Ausführungsbeispiel des Verbundelements gemäß Fig.1 im Detaildarstellung in einer Seitenansicht,
- Fig. 7: das Verbundelement gemäß Fig.6 in einer Ansicht in Pfeilrichtung A in Fig.6,
- Fig. 8: ein weiteres Ausführungsbeispiel des Verbundelements mit einer Ankerplatte verschweißt in schaubildlicher Darstellung,
- Fig. 9: das Verbundelement gemäß Fig.8 in Detaildarstellung in einer Seitenansicht,
- Fig.10: das Verbundelement gemäß Fig.8 in einer Ansicht in Pfeilrichtung A in Fig.9,
- Fig.11: ein weiteres Ausführungsbeispiel des Verbundelements mit einer Ankerschiene verschweißt in schaubildlicher Darstellung,
- Fig.12: das Verbundelement gemäß Fig.ll in Detaildarstellung in Seitenansicht und
- Fig.13: das Verbundelement gemäß Fig.11 in einer Ansicht in Pfeilrichtung A in Fig.12.

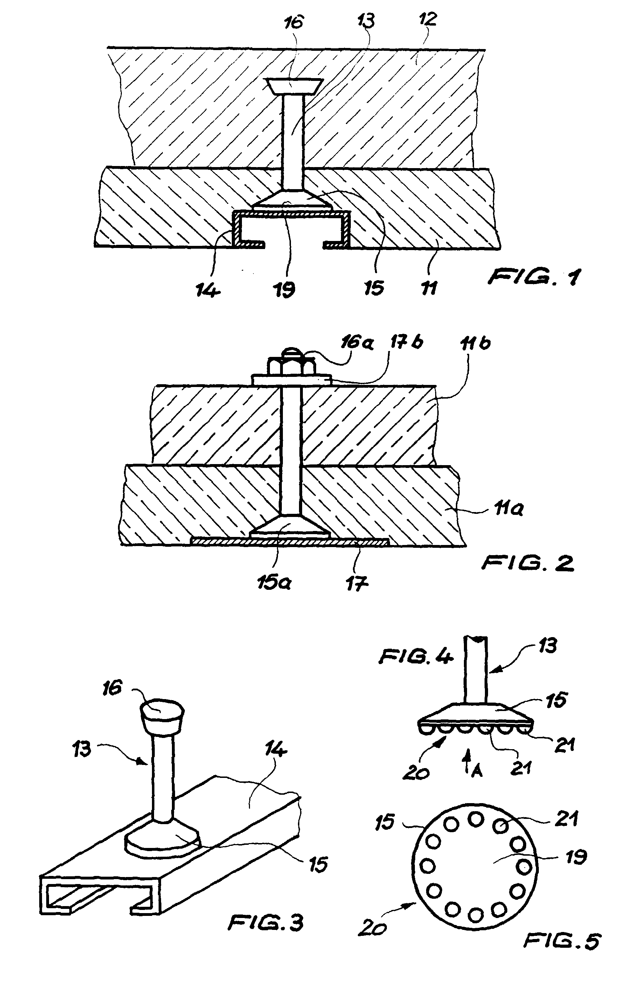

Die Fig.1 zeigt die Befestigung einer Deckenplatte 11 an Ortbeton 12. Bei diesem Ausführungsbeispiel ist ein als Bolzenanker ausgebildetes Verbundelement 13 mit einer Ankerschiene 14 durch Schweißen verbunden. Die Ankerschiene dient zur Aufnahme und Führung von beispielsweise Transporthaken und ist bei der Herstellung der Deckenplatte 11 gemeinsam mit dem Verbundelement 13 in dieselbe eingebettet worden.

Das Verbundelement 13 weist einen tellerförmigen Fuß 15 auf, der mit der dünnwandigen im Querschnitt C-förmigen Ankerschiene 14 durch Punktschweißen verschweißt ist. Das andere Ende des Verbundelements 13 ist mit einem Ankerkopf 16 versehen, der in den Ortbeton 12 ragt und die Deckenplatten-Verbundelement-Einheit in Verbindung hält.

Eine ähnliche Ausführung ist in der Fig.2 dargestellt. Dabei ist eine Deckenplatte 11a mit einer weiteren Dekkenplatte 11b verbunden. Der Fuß 15a ist mit einer Ankerplatte 17 verschweißt und der Ankerkopf 16a besteht aus einem Gewindeschaft, der die Deckenplatte llb zur Aufnahme einer Mutter 18, überragt, mit der eine weitere Ankerplatte 17b gegen die Deckenplatte 11b verspannt ist.

Erhebliche Schwierigkeiten bereitet die Schweißverbindung zwischen dem tellförmigen Fuß 15 mit der dünnwandigen Ankerschiene 14 bzw. mit der dünnwändigen Ankerplatte 17, im Hinblick auf eine ausreichende Zugfestigkeit zwischen diesen Bauteilen.

Zur Herstellung der Schweißverbindung zwischen dem Fuß 15 und der Ankerschiene 14 wird das Punktschweißverfahren angewendet, weil es schnell und sauber durchführbar ist.

Die große Fußfläche, die zur Aufnahme der Tragkräfte erforderlich ist, verhindert jedoch eine zuverlässige Schweißung, weil auch die Schweißstromstärke nicht beliebig erhöht werden kann, um die Ankerschiene 14 nicht zu deformieren oder sogar zu zerstören.

Die Erfindung schafft hier Abhilfe, indem die der Ankerschiene 14 zugekehrte Fläche 19 mit einer Vielzahl von Erhöhungen 20 versehen sind, die bei dem in der Fig.3 bis 5 dargestellten Ausführungsbeispiel als Noppen 21 ausgebildet sind.

Auf diese Weise werden beim Schweißvorgang, bei dem eine elektrische Spannung zwischen dem Verbundelement 13 und der Ankerschiene 14 angelegt wird, zwischen dem Fuß 15 und der Ankerschiene 14 über die Fläche 19 verteilt mehrere Stellen mit einem hohen elektrischen Übergangswiderstand erzeugt, so daß sich eine Vielzahl von Schweißstellen ergeben, die eine zuverlässige Verschweißung des Verbundelements 13 mit der Ankerschiene 14 gewährleisten und auch die erforderliche Zug- bzw. Tragfestigkeit aufweisen.

Dabei können die Noppen 21 in einem oder mehreren Ringen auf der Fläche 19 oder auch willkürlich verteilt darauf angeordnet sein. Die Noppen 21 können weiter oder enger zueinander angeordnet sein, je nachdem welche Festigkeit verlangt ist und welche Intensität des Schweißprozesses hinsichtlich der gewählten Werkstoffe und ihrer Dickenabmessungen möglich ist.

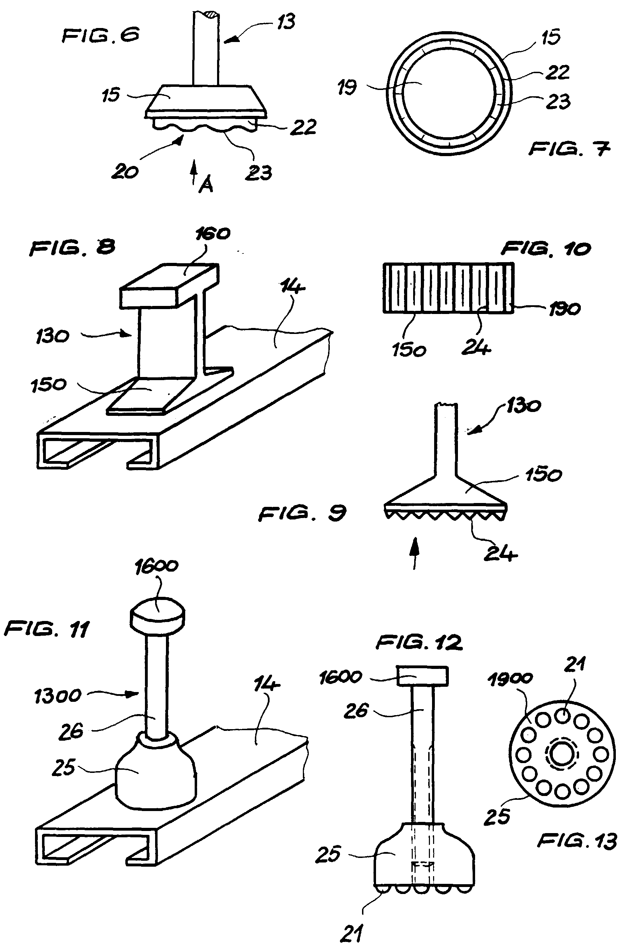

Eine weitere Ausführungsvariante der Erhöhungen 20 zeigen die Fig.6 und 7. Die Erhöhungen bestehen hier aus einem kronenförmigen Steg 22, dessen der Ankerschiene zugekehrte Oberfläche mit wellenförmigen Erhebungen 23 versehen ist.

In der Fig.8 ist ein weiteres Ausführungsbeispiel eines Verbundelements 130 gezeigt, das als Doppel-T-Abschnitt ausgebildet und einenends mit einem Ankerkopf 160 und anderenends mit einem rechteckförmigen Fuß 150 versehen ist. Die der Ankerschiene 14 zugekehrte Fläche 190 des Fußes 150 ist mit rippenförmigen Erhebungen 24 versehen, die längs, quer oder diagonal verlaufen können.

In einem weiteren in den Fig.ll bis 13 dargestellten Ausführungsbeispiel besteht das Verbundelement 1300 aus einer Ankermutter 25, in die ein mit einem Ankerkopf 1600 versehener Gewindebolzen 26 einschraubbar ist.

Die der Ankerschiene 14 zugekehrte Fläche 1900 der Ankermutter 25 ist beim Ausführungsbeispiel mit im Kreis angeordneten Noppen 240 versehen. Auch sternförmig angeordnete rippenförmige Erhebungen sind denkbar. Die Ankermutter kann jedoch mit jeder anderen Form von Erhebungen, wie wulstförmige, keilförmige, noppenförmige oder zahnförmige, für die Zwecke einer zuverlässigen Punktschweißung hoher Zugfestigkeit versehen werden.

## Patentansprüche

1. Verbundelement (13) zum Befestigen von Metallkörpern an bzw. in Betonbauteilen, das einen an bzw. in dem Betonbauteil (11; 12) verankerbaren Ankerkopf (16) und einen mit dem Metallkörper (14; 17) verschweißbaren Fuß (15; 15a) aufweist, **dadurch gekennzeichnet**, daß die dem Metallkörper (14; 17) zugekehrte Fläche (19; 190; 1900) des Fußes (15; 150; 25) des Verbundelements (13; 130; 1300) mehrere über die Fläche verteilte und dieselbe überragende Erhöhungen (20) aufweist.

2. Verbundelement nach Anspruch 1, dadurch gekennzeichnet, daß das Verbundelement (13) aus einem Bolzenanker mit tellerförmig ausgebildetem Fuß (15) besteht, auf dessen dem Metallkörper (14) zugekehrter Fläche (19) mehrere Noppen (21) ausgebildet sind.

3. Verbundelement nach Anspruch 1, dadurch gekennzeichnet, daß das Verbundelement (130) aus einem Bolzenanker mit Doppel-T-förmigem Profil besteht, auf dessen dem Metallkörper (14) zugekehrter Fläche (190) mehrere wulst-, zahn- bzw. rippenförmige Erhebungen (24) bzw. Noppen (21) ausgebildet sind.

4. Verbundelement nach Anspruch 1, dadurch gekennzeichnet, daß das Verbundelement (1300) eine Ankermutter (25) aufweist, in die ein als Gewindebolzen (26) ausgebildeter Bolzenanker einschraubbar ist und auf deren dem Metallkörper (14) zugekehrter Fläche (1900) rippen-, bzw. zahn-, bzw. noppenförmige Erhebungen (240) ausgebildet sind.

5. Verbundelement nach Anspruch 4, dadurch gekennzeichnet, daß die wulst- bzw. zahnförmigen Erhebungen (20) sternförmig auf der dem Metallkörper (14) zugekehrten Fläche (1900) angeordnet sind.

6. Verbundelement nach Anspruch 1, dadurch gekennzeichnet, daß die Erhöhungen (20) auf der dem Metallkörper zugekehrten Fläche des Verbundelements (13;130;1300) als kronenförmige Stege (22) ausgebildet sind, die eine wellen- bzw. zahnförmige Oberfläche aufweisen.

7. Verbundelement nach einem der Ansprüche 1 bis 6, dadurch gekennzeichnet, daß die kronenförmigen Stege (22) parallel zur Außenkontur des Fußes (15) des Verbundelements (13) verlaufen.

8. Verbundelement nach Anspruch 1, dadurch gekennzeichnet, daß der Metallkörper (14) als Ankerschiene mit profiliertem Querschnitt ausgebildet ist.

9. Verbundelement nach Anspruch 1, dadurch gekennzeichnet, daß der Metallkörper (17) als flache Ankerplatte ausgebildet ist.

## Claims

1. Linking element (13) for fastening metal bodies on and in concrete building elements, respectively, said linking element comprising an anchor head (16) adapted to be anchored on and in the concrete unit (11; 12), respectively, as well as a base (15; 15a) adapted to be welded to the metal body (14; 17), **characterized in that** the surface (19; 190; 1900) of the base (15; 150; 25) of the linking element (13; 130; 1300), facing the metal body (14; 17), comprises a plurality of projections (20) distributed over said surface and projecting therefrom.

2. Linking element according to claim 1, characterized in that said linking element (13) consists of an anchor bolt with a disk-shaped base (15) having on its surface (19) which faces the metal body (14) a plurality of knobs (21).

3. Linking element according to claim 1, characterized in that said linking element (130) consists of an anchor bolt with an H-shaped section, the surface (190) of said section which faces the metal body (14) having a plurality of bulb-like, tooth-like, and rib-like projections (24) and knobs (21), respectively.

4. Linking element according to claim 1, characterized in that said linking element (1300) comprises an anchor nut (25) into which a threaded anchor bolt (26) can be screwed and on whose surface (1900) facing the metal body (14) projections (240) are formed having the shape of ribs, teeth and knobs, respectively.

5. Linking element according to claim 4, characterized in that the bulb-like and tooth-like projections (20), respectively, are arranged in a star-like manner on the surface (1900) facing the metal body (14).

6. Linking element according to claim 1, characterized in that the projections (20) are designed on the surface of said linking element (13; 130; 1300), facing the metal body, as crown-shaped studs (22) having a wave-shaped and tooth-shaped surface, respectively.

7. Linking element according to one of claims 1 to 6, characterized in that the crown-shaped studs (22) extend parallel to the outer contour of the base (15) of the linking element (13).

8. Linking element according to claim 1, characterized in that the metal body (14) is designed as an anchor rail with a profiled cross-section.

9. Linking element according to claim 1, characterized in that the metal body (17) is designed as a flat anchor plate.

## Revendications

1. Elément de liaison (13) pour la fixation de corps métalliques sur ou dans des composants de construction en béton présentant une tête d'ancrage (16) pouvant être ancrée dans le composant de construction en béton (11; 12) et un pied (15; 15a) pouvant être soudé sur le corps métallique (14; 17), **caractérisé en ce que** la surface (19; 190, 1900), adjacente au corps métallique (14; 17), du pied (15; 150; 25) de l'élément de liaison (13; 130; 1300) présente plusieurs éminences (20) réparties pardessus la surface et dépassant cette dernière.

2. Elément de liaison selon la revendication 1, caractérisé en ce que l'élément de liaison (13) consiste en un boulon d'ancrage avec un pied (15) en forme d'assiette, sur la surface (19) adjacente au corps métallique (14) duquel sont disposées plusieurs noppes (21).

3. Elément de liaison selon la revendication 1 caractérisé en ce que l'élément de liaison (130) consiste en un boulon d'ancrage avec un profilé en forme d'un double T, sur la surface (190) adjacente au corps métallique (14) duquel sont disposées plusieurs éminences (24) en forme de bourrelets, de dents ou de nervures, ou des noppes.

4. Elément de liaison selon la revendication 1, caractérisé en ce que l'élément de liaison (1300) présente un écrou d'ancrage (25) dans lequel un boulon d'ancrage (26) sous forme de boulon fileté peut être vissé et sur la surface (1900) adjacente au corps métallique (14) duquel sont disposées des éminences en forme de nervures, de dents ou de noppes.

5. Elément de liaison selon la revendication 4, caractérisé en ce que les éminences (20) en forme de bourrelets ou de dents sont disposées en étoile sur la surface (1900) adjacente au corps métallique (14).

6. Elément de liaison selon la revendication 1, caractérisé en ce que les éminences (20) sur la surface de l'élément de liaison (13; 130; 1300) adjacente au corps métallique sont réalisées sous forme de barrettes (22) en forme de couronne présentant une surface ondulée ou en forme de dents.

7. Elément de liaison selon l'une des revendications 1 à 6, caractérisé en ce que les barrettes (22) en forme de couronne s'étendent en parallèle au contour extérieur du pied (15) de l'élément de liaison (13).

8. Elément de liaison selon la revendication 1, caractérisé en ce que le corps métallique (14) est prévu comme rail d'ancrage avec une section profilée.

9. Elément de liaison selon la revendication 1, caractérisé en ce que le corps métallique (17) est prévu comme plaque d'ancrage plate.
